# DEMANDE DE BREVET EUROPEEN

(11) **EP 4 383 411 A1**
(43) Date de publication de la demande: **12.06.2024**
(21) Numéro de dépôt: 22306828.9
(22) Date de dépôt: 08.12.2022
(51) Int. Cl.: H01M 50/103, H01M 50/533, H01M 50/536, H01M 50/54, H01M 50/528, H01M 50/55

(54) **CELLULE ÉLECTROCHIMIQUE POUR BATTERIE COMPORTANT UN ORGANE DE CONTACT POUR COINCER UNE PLURALITÉ D` ÉLECTRODES D'UN EMPILEMENT ET LES RELIER À UNE BORNE**

(71) Demandeur: Automotive Cells Company SE, 92300 Levallois Perret (FR)
(72) Inventeur: MATHIEU, Alexandre, Pierre, Maurice, 33300 BORDEAUX (FR); BRIEN, Patrick, 33290 PAREMPUYRE (FR); ARDRINO, Thomas, 33320 EYSINES (FR); LE COZ, Thomas, 29560 TRÉGARVAN (FR)
(74) Mandataire: Lavoix

(57) **Abrégé**

Cellule électrochimique (10) pour batterie, comprenant :
- un boîtier (12), et un couvercle,
- un empilement (16) d'éléments électrochimiques (18),
- une pluralité d'électrodes (20) comprenant des parties internes (22) formant certains des éléments électrochimiques, et des feuillets (24) émergeant d'une face latérale (26) de l'empilement et formant un faisceau (52) comportant une portion proximale (54), une portion médiane (56) et une portion distale (58), les feuillets convergeant dans la portion proximale vers la portion médiane, et s'étendant les uns contre les autres dans la portion distale,
- un organe de contact (36), électriquement conducteur, pour relier électriquement la pluralité d'électrodes à une borne électrique, la portion distale étant coincée entre deux mâchoires (60, 62) de l'organe de contact, et s'étendant parallèlement à la face latérale.

## Description

La présente invention concerne une cellule électrochimique pour batterie.

L'invention concerne aussi un procédé de montage d'une telle cellule électrochimique.

L'invention s'applique en particulier à la réalisation d'une batterie, notamment pour véhicule électrique ou hybride. On entend par « batterie » une pluralité de cellules électrochimiques reliées électriquement les unes aux autres. Selon un exemple particulier de batterie, la pluralité de cellules électrochimiques est agencée sous la forme d'un ou plusieurs module(s), chaque module comprenant plusieurs cellules électrochimiques raccordées électriquement les unes aux autres et assemblées mécaniquement les unes aux autres par un système d'assemblage, tel que des plaques d'assemblage.

Une cellule électrochimique comprend, en particulier, un boîtier connu sous le terme anglais de « can » fermé par un couvercle connu par exemple sous le terme anglais de « cover », et un empilement d'éléments électrochimiques situé dans le boîtier et connu sous le terme anglais de « stack ». L'empilement comprend notamment des électrodes positives et des électrodes négatives formant des feuillets séparés par une couche de séparation, connu sous le terme de « séparateur ».

Les électrodes positives sont reliées à une borne positive du couvercle, et les électrodes négatives reliées à une borne négative. Pour réaliser ces connexions, les électrodes comprennent des portions qui dépassent de l'empilement et qui sont soudées les unes aux autres et sur un organe de contact, lequel est soudé sur l'une des bornes.

Les électrodes d'un même type forment un faisceau de feuillets à l'extérieur de l'empilement, qui est difficile à manipuler et à souder sur l'organe de contact lors du montage de la cellule électrochimique. Un certain espace est donc prévu entre l'empilement et le boîtier et/ou le couvercle pour permettre le montage, qui reste complexe. Une fois la cellule électrochimique montée, cet espace représente un volume inutile, et a un impact négatif sur la densité énergétique (quantité d'énergie stockable par unité de volume) de la cellule électrochimique pour un boîtier de dimensions données.

Un but de l'invention est donc de fournir une cellule électrochimique présentant une meilleure densité énergétique, sans augmenter la complexité du montage, et si possible en la diminuant.

A cet effet, l'invention a pour objet une cellule électrochimique pour batterie comprenant :
- un boîtier, et un couvercle comprenant au moins une première borne électrique, le boîtier et le couvercle définissant ensemble un volume intérieur,
- un empilement situé dans le volume intérieur et comprenant des éléments électrochimiques empilés dans une direction d'empilement,
- au moins une première pluralité d'électrodes comprenant des parties internes formant certains des éléments électrochimiques de l'empilement, et des feuillets émergeant d'une face latérale de l'empilement, les feuillets émergeant selon une première direction transversale perpendiculaire à la direction d'empilement, les feuillets étant sensiblement parallèles à une deuxième direction transversale perpendiculaire à la direction d'empilement et à la première direction transversale, les feuillets formant un faisceau comportant une portion proximale, une portion médiane et une portion distale en suivant les feuillets depuis l'empilement, les feuillets convergeant dans la portion proximale vers la portion médiane, et s'étendant les uns contre les autres dans la portion distale, et
- au moins un premier organe de contact, électriquement conducteur, adapté pour relier électriquement la première pluralité d'électrodes à la première borne électrique dans une position montée du premier organe de contact, la portion distale du faisceau étant coincée entre deux mâchoires du premier organe de contact, et s'étendant parallèlement à la face latérale.

Selon des modes particuliers de réalisation, la cellule électrochimique comprend l'une ou plusieurs des caractéristiques suivantes, prise(s) isolément ou selon toutes les combinaisons techniquement possibles :
- le premier organe de contact comprend une partie de contact plane s'étendant entre le couvercle et l'empilement dans la deuxième direction transversale ;
- le premier organe de contact présente une forme en « L » en vue selon la direction d'empilement et coiffe un coin de l'empilement ;
- au moins 80% des feuillets sont pliés à 180° autour de la deuxième direction transversale dans la portion médiane ;
- la face latérale est perpendiculaire à la première direction transversale ;
- la face latérale est située à une distance du boîtier ou du couvercle dans la première direction transversale, la distance étant inférieure ou égale à 4,4 mm ;
- l'une des deux mâchoires définit un bord d'attaque s'étendant dans la deuxième direction transversale, la portion médiane du faisceau s'étendant autour du bord d'attaque ;
- les feuillets sont soudés entre eux dans la portion médiane et/ou dans la portion distale ;
- les feuillets sont soudés sur le premier organe de contact ;
- l'une des deux mâchoires est flexible par rapport à l'autre des deux mâchoires dans une direction de coincement de la portion distale du faisceau, entre une configuration libre, dans laquelle la portion distale du faisceau est à l'écart des deux mâchoires, et une configuration de coincement, dans laquelle les deux mâchoires sont moins proches l'une de l'autre que dans la configuration libre et coincent la portion distale du faisceau ;
- l'une des deux mâchoires présente une découpe intérieure formant un passage selon la première direction transversale et l'autre des deux mâchoires présente une extrémité libre dans la deuxième direction transversale, l'extrémité libre comportant deux chanfreins inclinés par rapport à la deuxième direction transversale et situés en vis-à-vis du passage selon la première direction transversale pour faciliter une insertion de la portion distale du faisceau entre les deux mâchoires, l'insertion se faisant dans la deuxième direction transversale ;
- ladite autre des deux mâchoires présente en outre une autre extrémité située du côté de la première borne électrique dans la deuxième direction transversale par rapport à l'extrémité libre, l'extrémité libre étant plus proche de ladite une des deux mâchoires que l'autre extrémité dans la première direction transversale ;
- l'une des deux mâchoires est montée sur l'autre des deux mâchoires mobile en rotation autour d'un axe perpendiculaire à la deuxième direction transversale, entre une position ouverte, dans laquelle la portion distale du faisceau est à l'écart des deux mâchoires et les deux mâchoires sont libres en rotation l'une par rapport à l'autre, et une position fermée, dans laquelle les deux mâchoires sont fixées l'une sur l'autre et coincent la portion distale du faisceau ; et
- la cellule électrochimique comprend en outre : une deuxième pluralité d'électrodes structurellement analogues à la première pluralité d'électrodes, comprenant des parties internes formant certains des éléments électrochimiques de l'empilement, et des feuillets émergeant d'une face latérale de l'empilement ; et un deuxième organe de contact, électriquement conducteur, adapté pour relier électriquement la deuxième pluralité d'électrodes à une deuxième borne électrique du couvercle dans une position montée du deuxième organe de contact.

L'invention a aussi pour objet un procédé de montage d'une cellule électrochimique pour batterie, comprenant les étapes suivantes :
- fourniture d'un boîtier, et d'un couvercle comprenant au moins une première borne électrique, le boîtier et le couvercle définissant ensemble un volume intérieur,
- fourniture d'un empilement comprenant des éléments électrochimiques empilés dans une direction d'empilement,
- installation de l'empilement dans le volume intérieur,
- fourniture d'au moins une première pluralité d'électrodes comprenant des parties internes formant certains des éléments électrochimiques de l'empilement, et des feuillets émergeant d'une face latérale de l'empilement selon une première direction transversale perpendiculaire à la direction d'empilement,
- constitution d'un faisceau à partir des feuillets, les feuillets étant sensiblement parallèles à une deuxième direction transversale perpendiculaire à la direction d'empilement et à la première direction transversale, le faisceau comportant une portion proximale, une portion médiane et une portion distale en suivant les feuillets depuis l'empilement, les feuillets convergeant dans la portion proximale vers la portion médiane, et étant superposés les uns contre les autres dans la portion distale,
- fourniture d'au moins un premier organe de contact électriquement conducteur,
- coincement de la portion distale du faisceau entre deux mâchoires du premier organe de contact, et mise de la portion distale dans une position parallèle à la face latérale, et
- mise du premier organe de contact dans une position montée dans laquelle la première pluralité d'électrodes est connectée électriquement à la première borne électrique à l'aide du premier organe de contact.

L'invention sera mieux comprise à la lecture de la description qui va suivre, donnée uniquement à titre d'exemple et faite en se référant aux dessins annexés, sur lesquels :
- la figure 1 est une vue en perspective d'une cellule électrochimique selon l'invention, à l'état monté,
- la figure 2 est une vue schématique en perspective, partielle, éclatée de la cellule électrochimique représentée sur la figure 1, le couvercle et le premier organe de contact étant éloignés de l'empilement,
- la figure 3 est une vue schématique en perspective du premier organe de contact et du faisceau de feuillets formé par la première pluralité d'électrodes,
- la figure 4 est une vue schématique, en coupe, partielle, de la cellule électrochimique représentée sur les figures 1 et 2, selon un plan médian perpendiculaire à la deuxième direction transversale,
- la figure 5 est une vue schématique, partielle, en perspective, d'un organe de contact constituant une variante du premier organe de contact représenté sur les figures 1 à 4, les mâchoires étant en position ouverte, et
- la figure 6 est une vue schématique, partielle, en perspective, de l'organe de contact représenté sur la figure 5, les mâchoires étant en position fermée sur le faisceau.

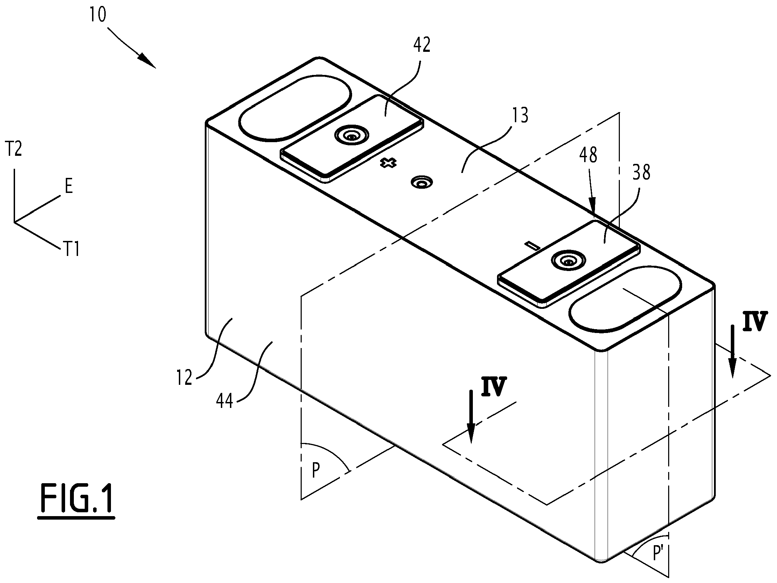

En références aux figures 1 à 4, on décrit une cellule électrochimique 10 selon l'invention.

La cellule électrochimique 10 est par exemple destinée à être intégrée, avantageusement avec d'autres cellules électrochimiques similaires (non représentées), dans une batterie (non représentée), notamment pour un véhicule électrique ou hybride (non représenté).

La cellule électrochimique 10 a par exemple une forme générale parallélépipédique, adaptée pour permettre la constitution d'un module ou d'un pack (non représentés) intégrant une rangée de cellules électrochimiques connectées électriquement entre elles.

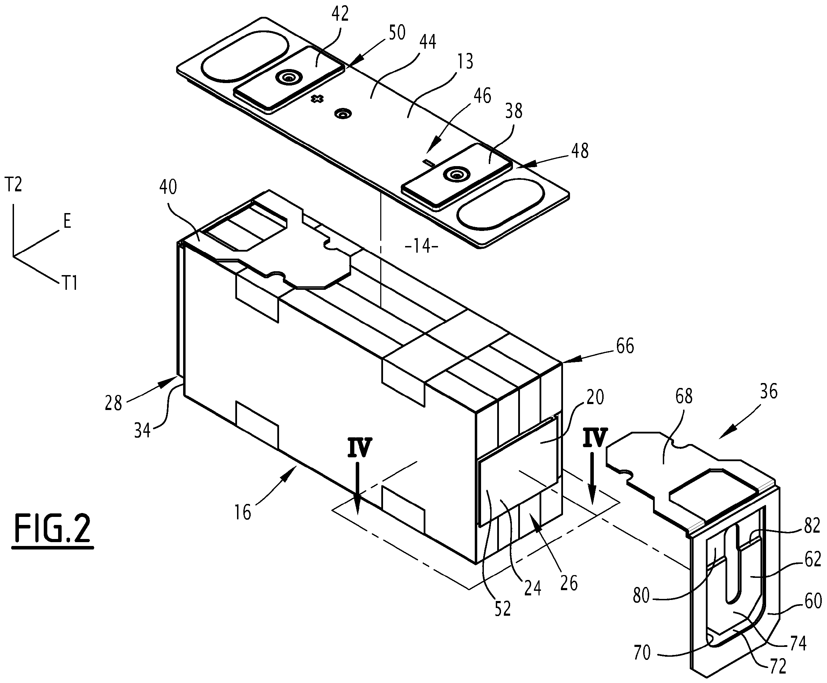

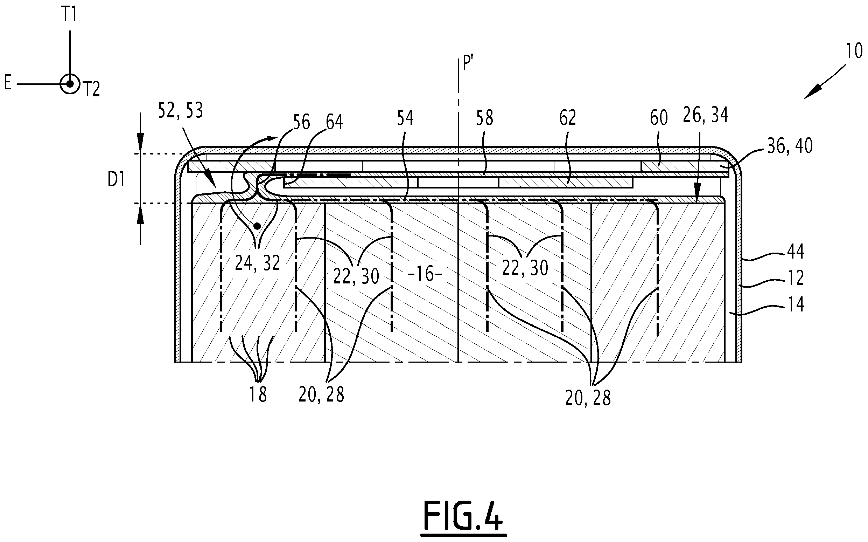

La cellule électrochimique 10 comprend un boîtier 12 et un couvercle 13 définissant ensemble un volume intérieur 14 (Fig. 2 et 4). La cellule électrochimique 10 comprend un empilement 16 comportant des éléments électrochimiques 18 et situé dans le volume intérieur 14, les éléments électrochimiques étant empilés dans une direction d'empilement E.

La cellule électrochimique 10 comprend une première pluralité d'électrodes 20, positives ou négatives, qui comportent des parties internes 22 formant certains des éléments électrochimiques 18 de l'empilement 16, et des feuillets 24 émergeant d'une face latérale 26 de l'empilement selon une première direction transversale T1 perpendiculaire à la direction d'empilement E.

Dans l'exemple, la cellule électrochimique 10 comprend aussi une deuxième pluralité d'électrodes 28, négatives ou positives, comprenant des parties internes 30 formant certains des éléments électrochimiques 18 de l'empilement 16, et des feuillets 32 émergeant d'une face latérale 34 de l'empilement opposée à la face latérale 26 dans la première direction transversale T1. Sur la figure 4, les éléments 28 à 34 sont indiqués aux mêmes endroits que les éléments 20 à 26, mais se situent en réalité de l'autre côté de l'empilement 16 dans la première direction transversale T1.

La cellule électrochimique 10 comprend un premier organe de contact 36, électriquement conducteur, adapté pour relier électriquement la première pluralité d'électrodes 20 à une première borne 38, positive ou négative, du couvercle 13 dans une position montée du premier organe de contact 36.

Dans l'exemple, la cellule électrochimique 10 comprend aussi un deuxième organe de contact 40, électriquement conducteur, adapté pour relier électriquement la deuxième pluralité d'électrodes 28 à une deuxième borne électrique 42, négative ou positive, du couvercle 13 dans une position montée du deuxième organe de contact. Sur la figure 4, le deuxième organe de contact 40 est représenté au même endroit que le premier organe de contact 36 mais se situe en réalité de l'autre côté de l'empilement 16.

On définit également une deuxième direction transversale T2 perpendiculaire à la direction d'empilement E et à la première direction transversale T1. Le boîtier 12 a par exemple une forme de parallélépipède rectangle.

Le couvercle 13 définit par exemple deux orifices 48, 50 en travers desquels s'étendent la première borne électrique 38 et la deuxième borne électrique 42, qui sont situées sur une face de connexion 46 définie par le couvercle.

Le couvercle 13 est par exemple parallèle à la direction d'empilement E.

La face de connexion 46 s'étend, dans l'exemple représenté, perpendiculairement à la deuxième direction transversale T2.

Selon une variante non représentée, l'empilement 16 forme un seul bloc (sans les parties 16A à 16D).

L'empilement 16 comprend les parties internes 22, 30 de la première pluralité d'électrodes 20 et de la deuxième pluralité d'électrodes 28, en alternance et séparées par des séparateurs dans la direction d'empilement E.

L'empilement 16 présente avantageusement une forme de prisme autour de la direction d'empilement E, par exemple à base rectangle ou carrée, c'est-à-dire qu'il comporte quatre faces latérales. L'empilement 16 présente avantageusement une forme de parallélépipède rectangle.

La face latérale 26 est l'une des faces latérales du prisme.

Dans l'exemple, la face latérale 26 est en vis-à-vis du boîtier 12. La face latérale 26 est par exemple perpendiculaire au couvercle 13.

Selon une variante non représentée, la face latérale 26 est en vis-à-vis du couvercle 13, et non du boîtier 12. La face latérale 26 est par exemple parallèle au couvercle 13. Dans cette variante, la face latérale 34 et la face latérale 26 sont par exemple une seule et même face latérale de l'empilement 16. La face latérale 26 et la face latérale 34 sont par exemple sensiblement perpendiculaires à la première direction transversale T1.

Dans l'exemple, la face latérale 26 est située à une distance D1 (figure 4) du boîtier 12 dans la première direction transversale T1, la distance D1 étant avantageusement inférieure ou égale à 4,4 mm. Dans l'exemple, il en va de même pour la face latérale 34.

Dans la variante non représentée selon laquelle la face latérale 26 est en vis-à-vis du couvercle 13, la face latérale 26 est située à la distance D1 du couvercle 13 dans la première direction transversale T1. Avantageusement, il en va de même pour la face latérale 34.

La deuxième pluralité d'électrodes 28 diffère de la première pluralité d'électrodes 20 par sa nature chimique, mais est avantageusement structurellement analogue. Le deuxième organe de contact 40 est avantageusement structurellement analogue au premier organe de contact 36, ou, en variante, est par exemple symétrique du premier organe de contact par rapport à un plan P perpendiculaire à la première direction transversale T1. Aussi, seule la première pluralité d'électrodes 20 et le premier organe de contact 36 seront décrits en détail ci-après, en relation l'un avec l'autre. Les caractéristiques se transposent aisément à la deuxième pluralité d'électrodes 28 et au deuxième organe de contact 40.

Les parties internes 22 des électrodes 20 de la première pluralité forment par exemple des couches parallèles les unes aux autres, et perpendiculaires à la direction d'empilement E.

Les feuillets 24 sont sensiblement parallèles à la deuxième direction transversale T2. Les feuillets 24 forment un faisceau 52 comportant une portion proximale 54, une portion médiane 56 et une portion distale 58 en suivant les feuillets depuis l'empilement 16.

Les feuillets 24 émergent de la face latérale 26 selon la première direction transversale T1. Les feuillets 24 convergent ensuite dans la portion proximale 54 vers la portion médiane 56, et s'étendent les uns contre les autres dans la portion distale 58, par exemple successivement dans la première direction transversale T1.

La portion distale 58 du faisceau 52 est coincée entre deux mâchoires 60, 62 du premier organe de contact 36, et s'étend parallèlement à la face latérale 26.

La portion médiane 56 du faisceau s'étend par exemple autour d'un bord d'attaque 64 de la mâchoire 62 s'étendant dans la deuxième direction transversale T2.

Avantageusement, au moins 80% des feuillets 24 sont pliés à 180° autour de la deuxième direction transversale T2 dans la portion médiane 56. Dit autrement, le faisceau 52 n'est pas symétrique par rapport à un plan médian P' de l'empilement 16 perpendiculaire à la direction d'empilement E, la partie médiane 56 étant décalée vers le bord d'attaque 64 du premier organe de contact 36 dans la direction d'empilement E.

Selon un mode de réalisation particulier, les feuillets 24 sont soudés entre eux dans la portion médiane 56 et/ou dans la portion distale 58, par exemple par une soudure à ultrasons. Les feuillets 24 sont alors éventuellement soudés sur le premier organe de contact 36.

Le premier organe de contact 36 présente par exemple une forme en « L » en vue selon la direction d'empilement E et coiffe un coin 66 de l'empilement 16.

Dans la variante (non représentée) selon laquelle la face latérale 26 est en vis-à-vis du couvercle 13, l'organe de contact 36 est par exemple intégralement situé entre la face latérale 26 et le couvercle 13 dans la première direction transversale T1, et présente avantageusement une forme en « I » en vue selon la direction d'empilement E.

Le premier organe de contact 36 est par exemple symétrique par rapport au plan médian P'.

Le premier organe de contact 36 est par exemple en aluminium ou en cuivre, ou en alliage comprenant de l'aluminium ou du cuivre.

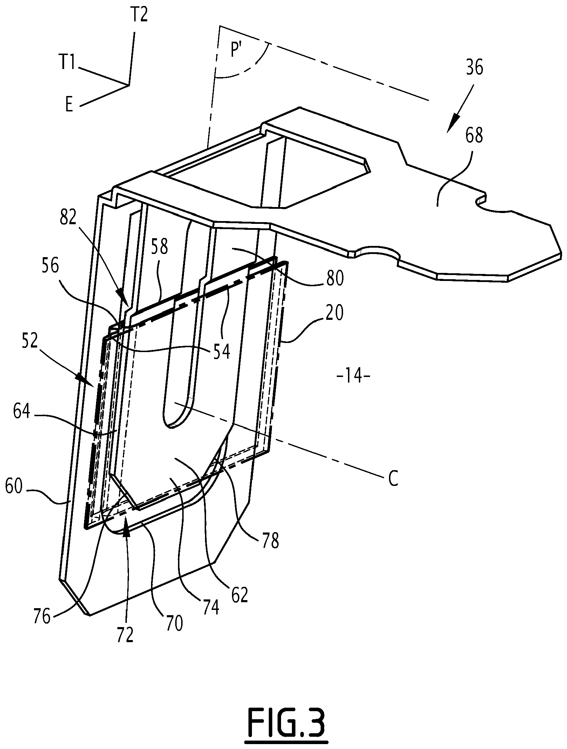

Le premier organe de contact 36 comprend par exemple une partie de contact 68 (fig. 2 et 3) plane s'étendant entre le couvercle 13 et l'empilement 16 dans la deuxième direction transversale T2, la partie de contact étant en contact mécanique et électrique avec la première borne électrique 38.

Selon un mode de réalisation particulier, la partie de contact 68 est soudée sur la première borne électrique 38.

Selon une variante non représentée, la partie de contact 68 comporte une lame ressort adaptée pour s'appuyer sur la première borne électrique 38.

Les deux mâchoires 60, 62 sont par exemple perpendiculaires à la partie de connexion 68, avantageusement pour épouser la forme de l'empilement 16.

La mâchoire 62 est par exemple flexible par rapport à l'autre mâchoire 60 dans une direction de coincement C de la portion distale 58 du faisceau 52, entre une configuration libre (figure 2), dans laquelle la portion distale du faisceau est à l'écart des deux mâchoires 60, 62, et une configuration de coincement (figures 3 et 4), dans laquelle les deux mâchoires sont moins proches l'une de l'autre que dans la configuration libre et coincent la portion distale du faisceau.

Avantageusement, la mâchoire 60 présente une découpe intérieure 70 formant un passage 72 selon la première direction transversale T1. La mâchoire 62 présente une extrémité libre 74 dans la deuxième direction transversale T2, l'extrémité libre comportant deux chanfreins 76, 78 inclinés par rapport à la deuxième direction transversale T2 et situés en vis-à-vis du passage 72 selon la première direction transversale T1. Ceci facilite une insertion de la portion distale 58 du faisceau 52 entre les deux mâchoires 60, 62, dans la deuxième direction transversale T2.

Eventuellement, la mâchoire 62 présente une autre extrémité 80 située du côté de la première borne électrique 38 dans la deuxième direction transversale T2 par rapport à l'extrémité libre 74. L'extrémité libre 74 est par exemple plus proche de l'autre mâchoire 60 que l'autre extrémité 80 dans la première direction transversale T1. Dit autrement, la mâchoire 62 forme un décrochement 82 qui augmente la force de coincement exercée par les mâchoires 60, 62 sur la portion distale 58 du faisceau.

Selon une variante non représentée, le passage 72 est défini par la mâchoire 62 et le décrochement défini par l'extrémité libre 74 et l'autre extrémité 80 se trouve dans la mâchoire 60.

On va maintenant décrire rapidement un procédé de montage de la cellule électrochimique 10.

Tout d'abord, on se procure le boîtier 12, le couvercle 13, l'empilement 16, la première pluralité d'électrodes 20 et le premier organe de contact 36.

Puis on constitue le faisceau 52, le faisceau comportant la portion proximale 54, la portion médiane 56, et la portion distale 58 dans laquelle les feuillets 24 sont placés les uns contre les autres.

On coince la portion distale 58 entre les deux mâchoires 60, 62 du premier organe de contact 36, et on met de la portion distale dans une position parallèle à la face latérale 26.

Avantageusement, le coincement est réalisé alors que le premier organe de contact 36 est angulairement à l'écart de l'empilement 16, les deux mâchoires 60, 62 étant dans la configuration libre. Par exemple, les deux mâchoires 60, 62 s'étendent perpendiculairement à la face latérale 26, à proximité de cette dernière. Puis, la portion distale 58 du faisceau est engagée entre les deux mâchoires 60, 62 dans la deuxième direction transversale T2, en déplaçant le premier organe de contact 36 dans la deuxième direction transversale T2 par rapport à l'empilement 16. Les deux mâchoires 60, 62 sont alors dans la configuration de coincement. Ensuite, on pivote le premier organe de contact 36 autour de la deuxième direction transversale T2 par rapport à l'empilement 16, en rapprochant angulairement les deux mâchoires 60, 62 de la face latérale 26, jusqu'à ce que les deux mâchoires et la portion distale 58 soient sensiblement parallèles à la face latérale.

Ceci réalise un pliage du faisceau 52 qui présente les avantages suivants :
- simplification du montage (notamment par la suppression d'une soudure entre les feuillets 24 et l'organe de contact 36),
- augmentation des dimensions de l'empilement 16 et donc la densité énergétique de la cellule électrochimique 10,
- positionnement des feuillets 24 plus précis grâce à l'organe de contact 36.L'empilement 16 est installé dans le volume intérieur 14.

Le premier organe de contact 36 est mis dans la position montée, dans laquelle il connecte électriquement la première pluralité d'électrodes 20 à la première borne électrique 38 par la pose du couvercle 13.

On procède de manière analogue avec la deuxième pluralité d'électrodes 28 et le deuxième organe de contact 40.

Grâce aux caractéristiques décrites ci-dessus, notamment un premier organe de contact 36, et éventuellement le deuxième organe de contact 40, tous deux pourvus de deux mâchoires 60, 62, le faisceau 52 est plus facilement constitué et manipulé, la portion distale 58 étant coincée entre les deux mâchoires. Ceci permet de réduire la distance D1 et l'espace inutile entre la face latérale 26 et le boîtier 12, ce qui permet d'augmenter la densité énergétique de la cellule électrochimique 10, toutes choses égales par ailleurs, avantageusement de 2% à 5%.

En outre, si la portion distale 58 du faisceau n'est pas soudée sur le premier organe de contact 36, au moins une opération est économisée dans le procédé de montage de la cellule électrochimique 10. Deux opérations de soudure sont économisées si le deuxième organe de contact 40 est présent.

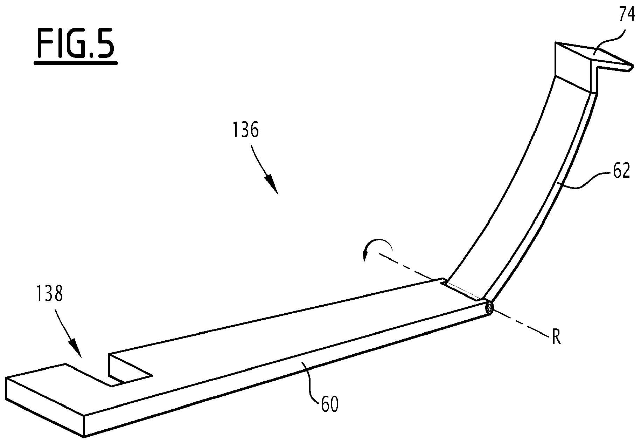

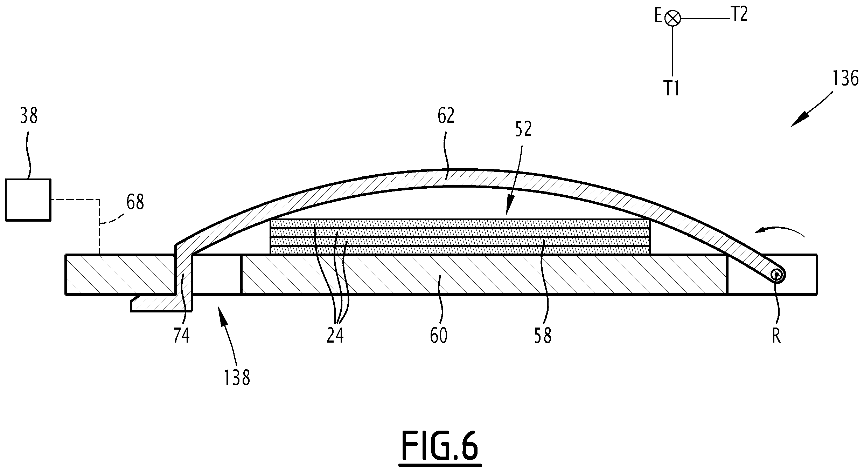

En référence aux figures 5 et 6, on va maintenant décrire un organe de contact 136 constituant une variante du premier organe de contact 36. L'organe de contact 136 est analogue au premier organe de contact 36 représenté sur les figures 2 à 4. Les éléments similaires portent les mêmes références numériques et ne seront pas décrit à nouveau. Seules les différences seront décrites en détail ci-après.

La partie de connexion 68 n'est pas représentée sur la figure 5 et simplement symbolisée sur la figure 6.

La mâchoire 62 est montée sur l'autre mâchoire 60 mobile en rotation autour d'un axe R perpendiculaire à la deuxième direction transversale T2 dans la position montée de l'organe de contact 136, entre une position ouverte (figure 5), dans laquelle la portion distale 58 du faisceau 52 est à l'écart des deux mâchoires et les mâchoires sont libres en rotation l'une par rapport à l'autre, et une position fermée (figure 6), dans laquelle les deux mâchoires sont fixées l'une sur l'autre et coincent la portion distale du faisceau.

Par exemple, l'extrémité libre 74 de la mâchoire 62 est reçue dans une encoche 138 définie par l'autre mâchoire.

Selon des variantes non représentées, d'autres modes de fixation de la mâchoire 62 sur la mâchoire 60 sont envisageables pour obtenir la position fermée.

## Revendications

1. Cellule électrochimique (10) pour batterie, comprenant :
- un boîtier (12), et un couvercle 13 comprenant au moins une première borne électrique (38), le boîtier (12) et le couvercle (13) définissant ensemble un volume intérieur (14),
- un empilement (16) situé dans le volume intérieur (14) et comprenant des éléments électrochimiques (18) empilés dans une direction d'empilement (E),
- au moins une première pluralité d'électrodes (20) comprenant des parties internes (22) formant certains des éléments électrochimiques (18) de l'empilement (16), et des feuillets (24) émergeant d'une face latérale (26) de l'empilement (16), les feuillets (24) émergeant selon une première direction transversale (T1) perpendiculaire à la direction d'empilement (E), les feuillets (24) étant sensiblement parallèles à une deuxième direction transversale (T2) perpendiculaire à la direction d'empilement (E) et à la première direction transversale (T1), les feuillets (24) formant un faisceau (52) comportant une portion proximale (54), une portion médiane (56) et une portion distale (58) en suivant les feuillets (24) depuis l'empilement (16), les feuillets (24) convergeant dans la portion proximale (54) vers la portion médiane (56), et s'étendant les uns contre les autres dans la portion distale (58), et
- au moins un premier organe de contact (36), électriquement conducteur, adapté pour relier électriquement la première pluralité d'électrodes (20) à la première borne électrique (38) dans une position montée du premier organe de contact (36), la portion distale (58) du faisceau (52) étant coincée entre deux mâchoires (60, 62) du premier organe de contact (36), et s'étendant parallèlement à la face latérale (26).

2. Cellule électrochimique (10) selon la revendication 1, dans laquelle le premier organe de contact (36) comprend une partie de contact (68) plane s'étendant entre le couvercle (13) et l'empilement (16) dans la deuxième direction transversale (T2).

3. Cellule électrochimique (10) selon la revendication 1 ou 2, dans laquelle le premier organe de contact (36) présente une forme en « L » en vue selon la direction d'empilement (E) et coiffe un coin (66) de l'empilement (16).

4. Cellule électrochimique (10) selon l'une quelconque des revendications 1 à 3, dans laquelle au moins 80% des feuillets (24) sont pliés à 180° autour de la deuxième direction transversale (T2) dans la portion médiane (56).

5. Cellule électrochimique (10) selon l'une quelconque des revendications 1 à 4, dans laquelle la face latérale (26) est perpendiculaire à la première direction transversale (T1).

6. Cellule électrochimique (10) selon l'une quelconque des revendications 1 à 5, dans laquelle la face latérale (26) est située à une distance (D1) du boîtier (12) ou du couvercle (13) dans la première direction transversale (T1), la distance (D1) étant inférieure ou égale à 4,4 mm.

7. Cellule électrochimique (10) selon l'une quelconque des revendications 1 à 6, dans laquelle l'une des deux mâchoires (60, 62) définit un bord d'attaque (64) s'étendant dans la deuxième direction transversale (T2), la portion médiane (56) du faisceau (52) s'étendant autour du bord d'attaque (64).

8. Cellule électrochimique (10) selon l'une quelconque des revendications 1 à 7, dans laquelle les feuillets (24) sont soudés entre eux dans la portion médiane (56) et/ou dans la portion distale (58).

9. Cellule électrochimique (10) selon la revendication 8, dans laquelle les feuillets (24) sont soudés sur le premier organe de contact (36).

10. Cellule électrochimique (10) selon l'une quelconque des revendications 1 à 9, dans laquelle l'une des deux mâchoires (60, 62) est flexible par rapport à l'autre des deux mâchoires (60, 62) dans une direction de coincement (C) de la portion distale (58) du faisceau (52), entre une configuration libre, dans laquelle la portion distale (58) du faisceau (52) est à l'écart des deux mâchoires (60, 62), et une configuration de coincement, dans laquelle les deux mâchoires (60, 62) sont moins proches l'une de l'autre que dans la configuration libre et coincent la portion distale (58) du faisceau (52).

11. Cellule électrochimique (10) selon la revendication 10, dans laquelle l'une des deux mâchoires (60, 62) présente une découpe intérieure (70) formant un passage (72) selon la première direction transversale (T1) et l'autre des deux mâchoires (60, 62) présente une extrémité libre (74) dans la deuxième direction transversale (T2), l'extrémité libre (74) comportant deux chanfreins (76, 78) inclinés par rapport à la deuxième direction transversale (T2) et situés en vis-à-vis du passage (72) selon la première direction transversale (T1) pour faciliter une insertion de la portion distale (58) du faisceau (52) entre les deux mâchoires (60, 62), l'insertion se faisant dans la deuxième direction transversale (T2).

12. Cellule électrochimique (10) selon la revendication 11, dans laquelle ladite autre des deux mâchoires (60, 62) présente en outre une autre extrémité (80) située du côté de la première borne électrique (38) dans la deuxième direction transversale (T2) par rapport à l'extrémité libre (74), l'extrémité libre (74) étant plus proche de ladite une des deux mâchoires (60, 62) que l'autre extrémité (80) dans la première direction transversale (T1).

13. Cellule électrochimique (10) selon l'une quelconque des revendications 1 à 9, dans laquelle l'une des deux mâchoires (60, 62) est montée sur l'autre des deux mâchoires (60, 62) mobile en rotation autour d'un axe (R) perpendiculaire à la deuxième direction transversale (T2), entre une position ouverte, dans laquelle la portion distale (58) du faisceau (52) est à l'écart des deux mâchoires (60, 62) et les deux mâchoires (60, 62) sont libres en rotation l'une par rapport à l'autre, et une position fermée, dans laquelle les deux mâchoires (60, 62) sont fixées l'une sur l'autre et coincent la portion distale (58) du faisceau (52).

14. Cellule électrochimique (10) selon l'une quelconque des revendications 1 à 13, comprenant en outre :
- une deuxième pluralité d'électrodes (28) structurellement analogues à la première pluralité d'électrodes (20), comprenant des parties internes (30) formant certains des éléments électrochimiques (18) de l'empilement (16), et des feuillets (32) émergeant d'une face latérale (34) de l'empilement (16), et
- un deuxième organe de contact (40), électriquement conducteur, adapté pour relier électriquement la deuxième pluralité d'électrodes (28) à une deuxième borne électrique (42) du couvercle (13) dans une position montée du deuxième organe de contact (40).

15. Procédé de montage d'une cellule électrochimique (10) pour batterie, comprenant les étapes suivantes :
- fourniture d'un boîtier (12), et d'un couvercle (13) comprenant au moins une première borne électrique (38), le boîtier (12) et le couvercle (13) définissant ensemble un volume intérieur (14),
- fourniture d'un empilement (16) comprenant des éléments électrochimiques (18) empilés dans une direction d'empilement (E),
- installation de l'empilement (16) dans le volume intérieur (14),
- fourniture d'au moins une première pluralité d'électrodes (20) comprenant des parties internes (22) formant certains des éléments électrochimiques (18) de l'empilement (16), et des feuillets (24) émergeant d'une face latérale (26) de l'empilement (16) selon une première direction transversale (T1) perpendiculaire à la direction d'empilement (E),
- constitution d'un faisceau (52) à partir des feuillets (24), les feuillets (24) étant sensiblement parallèles à une deuxième direction transversale (T2) perpendiculaire à la direction d'empilement (E) et à la première direction transversale (T1), le faisceau (52) comportant une portion proximale (54), une portion médiane (56) et une portion distale (58) en suivant les feuillets (24) depuis l'empilement (16), les feuillets (24) convergeant dans la portion proximale (54) vers la portion médiane (56), et étant superposés les uns contre les autres dans la portion distale (58),
- fourniture d'au moins un premier organe de contact (36) électriquement conducteur,
- coincement de la portion distale (58) du faisceau (52) entre deux mâchoires (60, 62) du premier organe de contact (36), et mise de la portion distale (58) dans une position parallèle à la face latérale (26), et
- mise du premier organe de contact (36) dans une position montée dans laquelle la première pluralité d'électrodes (20) est connectée électriquement à la première borne électrique (38) à l'aide du premier organe de contact (36).
